# EUROPÄISCHE PATENTSCHRIFT

(11) **EP 2 366 935 B1**
(45) Veröffentlichungstag und Bekanntmachung des Hinweises auf die Patenterteilung: **25.06.2014**
(21) Anmeldenummer: 11156174.2
(22) Anmeldetag: 28.02.2011
(51) Int. Cl.: F16L 55/115, B65D 90/54, F16J 13/12, F16J 13/24

(54) **Füllstutzenverschluss und Rohr- bzw. Schlauchkupplung mit einem Füllstutzenverschluss**
Closure for a filler neck and tube or hose coupling with such a closure
Fermeture d'un embout de remplissage et raccord de tuyau ou de tuyau flexible doté d'une telle fermeture

(30) Priorität: 04.03.2010 AT 3492010
(43) Veröffentlichungstag der Anmeldung: 21.09.2011
(73) Patentinhaber: Dipl. Ing. Gottfried Steiner, Ingenieurbüro Für Kunststofftechnik, 8724 Spielberg (AT)
(72) Erfinder: Steiner, Gottfried, 8724, Spielberg (AT)
(74) Vertreter: Vinazzer, Edith

(56) Entgegenhaltungen:
- DE-A1- 1 600 396
- DE-A1- 19 538 118
- DE-A1-102006 017 257
- DE-U1- 8 501 406
- DE-U1-202005 017 732
- US-A1- 2006 017 288

## Beschreibung

Die Erfindung betrifft einen Füllstutzenverschluss für eine Kupplungshälfte einer Rohr- bzw. Schlauchkupplung mit einem Füllstutzen, insbesondere für eine Kupplungshälfte einer Kupplung System STORZ, wobei der Verschluss Kupplungselemente zum Befestigen an einem Kupplungsteil des Füllstutzens aufweist. Die Erfindung betrifft ferner eine Rohr- bzw. Schlauchkupplung mit einer Kupplungshälfte mit einem Füllstutzenverschluss.

Füllstutzenverschlüsse dienen zum Verschließen von Füllstutzen von Rohrleitungen, beispielsweise von Rohren, welche dafür vorgesehen sind, Behälter, Lagerräume und dergleichen mit Flüssigkeiten oder rieselfähigem Schüttgut, beispielsweise Holzpellets für Heizungsanlagen, zu befüllen. Die Befüllung erfolgt unter Druck durch Anschluss einer Druckleitung an den Füllstutzen. An einem zweiten Füllstutzen wird eine Saugleitung angeschlossen, die dafür sorgt, dass beim Befüllen die Luft aus dem Behälter bzw. Lagerraum abtransportiert wird. Um diese Art der Befüllung zu ermöglichen, muss der Behälter, Lagerraum oder dergleichen dicht ausgeführt sein. Die Kupplungsteile der Füllstutzen sind meist mit einer handelsüblichen Kupplung bzw. Kupplungshälfte ausgerüstet, wobei Kupplungen nach dem System STORZ weit verbreitet sind. STORZ-Kupplungen werden unter anderem bei Feuerwehrschläuchen eingesetzt, weisen grundsätzlich Bajonettverschlüsse auf und sind derart ausgebildet, dass zwei gleich ausgeführte Kupplungshälften zueinander passen. Das System STORZ ist beispielsweise in der DIN14323 "A-Druck-Saugkupplung PN16" genormt.

Die Füllstutzen von Behältern und Lagerräumen befinden sich oft im Freien und sind deshalb Witterungseinflüssen ausgesetzt. Um das Eindringen von Wasser in den Behälter bzw. Lagerraum zu verhindern, sind übliche Füllstutzenverschlüsse dicht ausgeführt. Ein Wassereintritt in Lagerräume für Holzpellets kann je nach Menge eine Schädigung des Füllgutes und auch eine Zerstörung des Lagerraumes zur Folge haben. Die üblichen Füllstutzenverschlüsse nach dem System STORZ werden im Allgemeinen als Blindkupplungen bezeichnet, bei welchen für die erwähnte Abdichtung entweder eine zweite Dichtung, die in der Blindkupplung eingebracht ist, oder die bereits in der Kupplung des Füllstutzens befindliche Dichtung sorgt.

Ein Blindkupplungs-System STORZ, welches einen Blinddeckel aufweist, der mit einer Bohrung versehen ist, in der ein Rückschlagventil aufgenommen ist, ist aus der DE 10 2006 017 257 A1 bekannt. Soll in der Leitung ein Vakuum gehalten werden, das sich beispielsweise wegen Leckage am Absperrventil bis zur Blindkupplung hinzieht, sperrt das Rückschlagventil die Zentralbohrung über einen Ventilsitz und einem am Umfang vorhandenen O-Ring hermetisch ab, während die Kupplungsverbindung durch einen Druck-Saug-Dichtungsring dem stand hält.

Beim Befüllen und Einlagern von organischem Füllgut, wie Holzpellets, kann es beispielsweise unter Wärmeeinwirkung zum Ausgasen des Füllgutes kommen. Die dabei entstehenden gasförmigen Stoffe können aus einem dicht verschlossenen Behälter bzw. Lagerraum nicht entweichen. Wird ein Entweichen dieser gasförmigen Stoffe gewünscht, so muss im Behälter bzw. Lagerraum eine Be- und Entlüftungseinrichtung vorgesehen werden. Diese Be- und Entlüftungseinrichtungen müssen vor der Befüllung verschlossen und danach wieder geöffnet werden.

Der Erfindung liegt die Aufgabe zugrunde, eine Be- und Entlüftung des Behälters bzw. Lagerraumes über den Füllstutzenverschluss zu ermöglichen und dabei gleichzeitig zu gewährleisten, dass Spritzwasser nicht in den Füllstutzen und damit in das Behälterinnere gelangen kann. Das Eindringen von Wasser in den Füllstutzen muss in jeder möglichen Einbausituation des Füllstutzenverschlusses, ob waagrecht, senkrecht, schräg oder über Kopf, verhindert sein. Darüber hinaus soll gewährleistet sein, dass sich im Füllstutzenverschluss kein Wasser ansammeln kann, welches bei tiefen Temperaturen gefrieren könnte, da Eisbildungen die Funktion des Füllstutzenverschlusses beeinträchtigen können.

Gelöst wird die gestellte Aufgabe erfindungsgemäß dadurch, dass der Füllstutzenverschluss eine äußere Kappe und einen mit dieser fest verbundenen Verschlussteil aufweist, wobei die Kappe und der Verschlussteil einen Zwischenraum umschließen und der Verschlussteil mit den Kupplungselementen und mit einer zum Füllstutzen offenen Öffnung versehen ist, welche im Zwischenraum unter Freilassung eines Spaltes zur Innenfläche der Kappe von einem Begrenzungselement umschlossen ist, wobei die Kappe und der Verschlussteil Öffnungen zur Be-und Entlüftung und zum Ablauf von eingedrungenem Wasser aufweisen, und wobei im Zwischenraum von Kappe und Verschlussteil ein Labyrinthsystem aus die Kappe und den Verschlussteil miteinander verbindenden Wandelementen gebildet ist, welche ein ungehindertes Abfließen von Wasser an ihren Außenflächen gestatten und um die zentrale Achse des Füllstutzenverschlusses, sich quer zur jeweils radialen Richtung erstreckend, in regelmäßiger Anordnung vorgesehen sind.

Der Spalt zwischen dem Begrenzungsring des Verschlussteils und der Kappe ermöglicht den Austritt von luft- und gasförmigen Stoffen aus dem Inneren des Behälters bzw. Lagerraumes, das Labyrinthsystem und die weiteren vorgesehenen Öffnungen gestatten einen Austritt nach außen. Umgekehrt kann selbstverständlich über die Öffnungen des Labyrinthsystem und den Spalt Luft einströmen. Das Labyrinthsystem aus Wandelementen, welche die Innenflächen der Kappe und des Verschlussteils miteinander verbinden, der Begrenzungsring sowie die Öffnungen gewährleisten in jeder möglichen Einbaulage des Füllstutzenverschlusses ein Ablaufen und Nachaußenleiten von ggf. eingedrungenem Spritzwasser.

Besonders wirkungsvoll ist ein Ablaufen und Nachaußenleiten von ggf. eingedrungenem Spritzwasser bei einer Ausführung, bei der die Wandelemente in unterschiedlichen Abständen zur zentralen Achse und derart angeordnet sind, dass sie mit ihren seitlichen Randabschnitten und in radialen Richtungen betrachtet einander überlappen.

Die Wandelemente sollen eine dichte Anbindung an die Innenfläche der Kappe und die Innenfläche des Verschlussteils haben. Es ist daher von besonderem Vorteil, wenn die Wandelemente an der Kappe und/oder dem Verschlussteil angeordnet sind und in Stecknuten, welche jeweils am anderen Teil - Kappe und/oder Verschlussteil ― angeordnet sind, eingerastet sind.

Eine gleichmäßige Anordnung der Wandelemente ist für das optimale Ableiten von eingedrungenem Wasser in allen möglichen Einbaulagen des Verschlusses besonders wichtig. Eine diesbezüglich vorteilhafte Ausführung sieht vor, dass die Wandelemente entlang von konzentrischen Kreisen unterschiedlicher Radien, deren Mittelpunkt auf der zentralen Achse liegt, angeordnet sind. In diesem Zusammenhang ist es ferner günstig, wenn die Wandelemente mit ebenen Außenflächen versehene Rippen sind bzw. aufweisen.

Eine optimale Verbindung von Kappe und Verschlussteil lasst sich mit einer Ausführung erzielen, bei welcher die Kappe und der Verschlussteil jeweils einen Außenring aufweisen, wobei der Außenring der Kappe den Außenring des Verschlussteils außen umfasst.

Bei dieser Ausführung können zur Be-und Entlüftung sowie für einen Wasserabfluss die Außenringe miteinander korrespondierende Öffnungen und Ausnehmungen aufweisen. Zusätzlich können hier die Kappe und Verschlussteil miteinander verbunden werden, indem im Bereich der Ausnehmungen des Außenringes des Verschlussteils Schnapphaken ausgebildet sind, welche jeweils an einem Rand einer Öffnung des Außenringes der Kappe eingerastet sind.

Besonders vorteilhaft für die Wasserableitung aus dem Inneren des Verschlusses ist die Maßnahme, die Innenflächen der Kappe und des Verschlussteils von innen nach außen mit oder als abschüssig verlaufende(n) Flächen auszuführen.

Die Erfindung betrifft ferner eine Rohr- bzw. Schlauchkupplung mit einer Kupplungshälfte mit einem erfindungsgemäß ausgeführten Füllstutzenverschluss.

Weitere Merkmale, Vorteile und Einzelheiten der Erfindung werden nun anhand der Zeichnung, die Ausführungsbeispiele darstellt, näher beschrieben. Dabei zeigen
Fig. 1 bis Fig. 4 Ansichten einer Kappe und eines Verschlussteils eines Füllstutzenverschlusses,
   Fig. 1 die Außenseite der Kappe,
   Fig. 2 die Innenseite der Kappe,
   Fig. 3 die Außenseite des Verschlussteils,
   Fig. 4 die Innenseite des Verschlussteils,
Fig. 5 eine Außenansicht des aus Kappe und Verschlussteil zusammengesetzten Füllstutzenverschlusses
Fig. 6 einen Querschnitt durch den Füllstutzenverschluss entlang der Linie VI-VI der Fig. 5,
Fig. 7 eine Innenansicht (im Schnitt) des Füllstutzenverschluss bei entferntem Kappendeckel,
Fig. 8 einen Querschnitt durch den Füllstutzenverschluss entlang der Linie VIII-VIII der Fig. 5,
Fig. 9 eine Ansicht der Unterseite des Füllstutzenverschluss mit eingebautem Ventilator und
Fig. 10 einen Querschnitt durch den Füllstutzenverschluss gemäß Fig. 9 und entlang der Linie X-X der Fig. 9.

Der in den Figuren gezeigte Füllstutzenverschluss dient zum Verschließen einer Kupplungshälfte einer symmetrischen Schlauchkupplung des Systems STORZ, welche hinsichtlich Anschlussmaßen und Ausführungsanforderungen beispielsweise in der DIN 14323 genormt ist. Derartige symmetrische Kupplungen bestehen aus zwei Kupplungshälften, die jeweils einen Einbindestutzen und einen an diesem drehbar angebrachten Knaggenring aufweisen und im nicht gekuppelten Zustand durch Blinddeckel verschließbar sind. Der Füllstutzenverschluss gemäß der Erfindung ersetzt einen Blinddeckel und dient insbesondere zum Verschließen von Rohren bzw. Rohrleitungen, welche an Behältern, Lagerräumen und dergleichen angeordnet sind, um diese mit Flüssigkeiten oder rieselfähigem Schüttgut, beispielsweise Holzpellets für Heizanlagen, zu befüllen. Die Befüllung erfolgt unter Druck durch Anschluss einer Druckleitung auf den Füllstutzen. Der Behälter, Lagerraum oder dergleichen ist mit einem zweiten Stutzen versehen, an welchem eine Saugleitung angeschlossen wird, die dafür sorgt, dass während der Befüllung die Luft aus dem Behälter bzw. Lagerraum abtransportiert wird. Diese Art der Befüllung erforderte eine dichte Ausführung des Behälters bzw. Lagerraumes. Der nachfolgend näher beschriebene erfindungsgemäße Füllstutzenverschluss ist derart ausgeführt, dass er bei einer optimalen Be- und Entlüftungsfunktion ein Eindringen von Wasser in den Behälter bzw. den Lagerraum wirkungsvoll verhindert. Dabei ist es grundsätzlich möglich, erfindungsgemäß ausgeführte Füllstutzenverschlüsse 1 an andere bekannte und gängige Kupplungen anzupassen und entsprechend auszuführen.

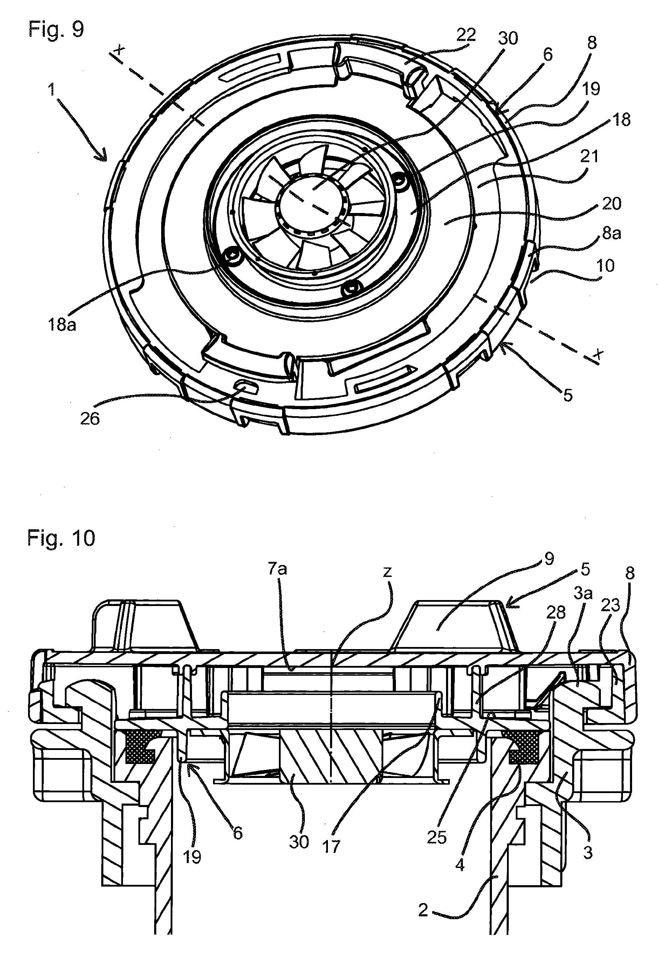

Die einzige Figur, in welcher ein Einbindestutzen bzw. Füllstutzen 2 gezeigt ist, ist Fig. 10. Am Füllstutzen 2 ist ein Knaggenring 3 (Kupplungsteil) mit zwei Knaggen 3a drehbar als Kupplungselement angeordnet, an der Außenseite des Füllstutzens 2 ist ein Dichtring 4 positioniert. Diese Teile sind normgemäß ausgeführt und dem Fachmann allgemein bekannt, sodass auf ihre Ausführung im Detail nicht eingegangen wird. Da es sich bei der dargestellten Ausführung des Füllstutzens 2 um einen mit zwei diametral gegenüberliegenden Knaggen 3a handelt, ist der Füllstutzenverschluss 1, wie noch näher beschrieben wird, entsprechend angepasst.

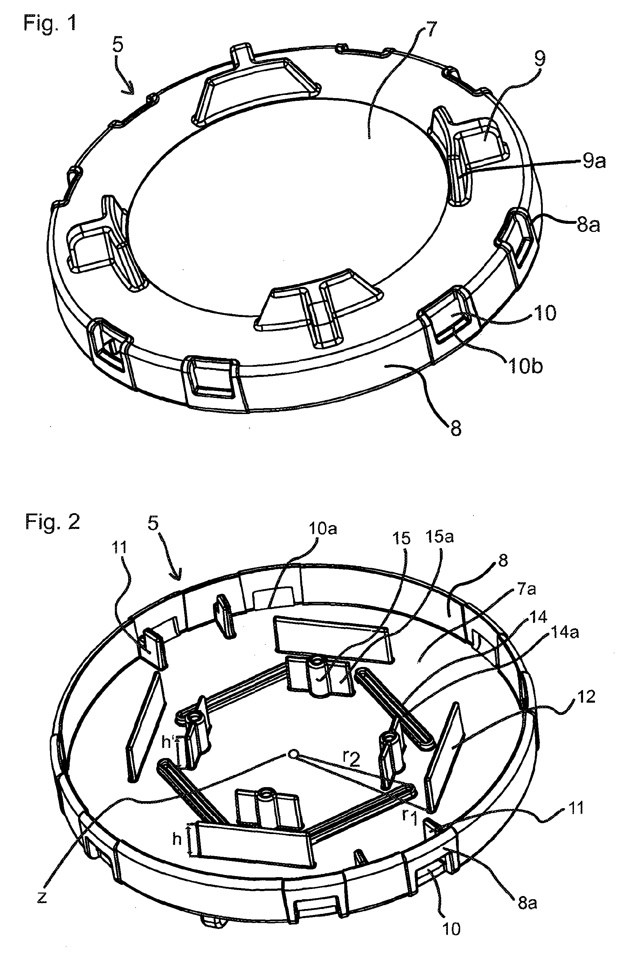

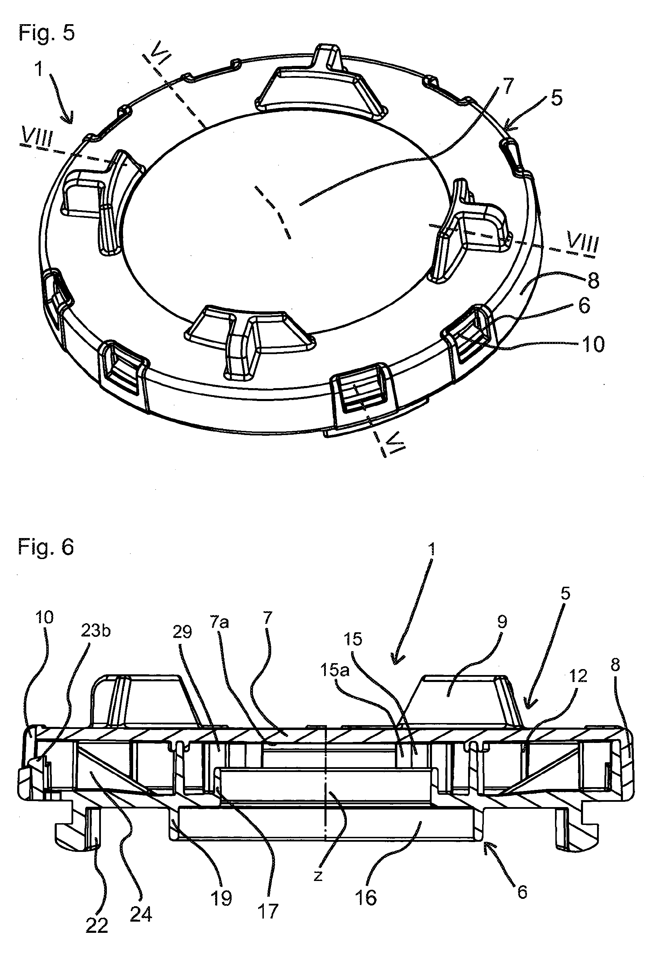

Wie insbesondere Fig. 1 bis Fig. 6 zeigen besteht der Füllstutzenverschluss 1 aus zwei miteinander fest verbundenen Teilen, einer Kappe 5 und einem Verschlussteil 6, welche eine gemeinsame zentrale Achse z (Fig. 6) aufweisen, wobei in den Figuren und der Beschreibung mit Z auf dieser Achse z befindliche Punkte bezeichnet sind. Die Kappe 5 weist einen geschlossenen Deckel 7 auf, welcher von einem Außenring 8 umlaufen ist. An seiner Außenseite (Fig. 1) ist der Deckel 7 mit vier Anschlussteilen 9 versehen, die durch seitliche Rippen 9a gestützt sind, die eine gleichmäßige Krafteinteilung beim Öffnen und Schließen mit einem genormten Schlüssel nach dem System STORZ bewirken. Die Erhebung der Anschlussteile 9 und Rippen 9a über die Fläche des Deckels 7 schützt eine auf die Fläche des Deckels 7 aufgebrachte Beschriftung. In der mittigen, in Fig. 1 und Fig. 5 kreisförmig markierten Fläche des Deckels 7 ist Platz zum Anbringen der Beschriftung, beispielsweise durch Bedrucken, oder zum Anbringen eines Aufklebers. Der Außenring 8 ist an seinem Umfang mit acht Öffnungen 10 versehen, welche jeweils paarweise angeordnet sind, wobei je zwei Paare einander diametral gegenüberliegen und über den Umfang der Kappe 5 gleichmäßig verteilt angeordnet sind. Wie insbesondere Fig. 2 zeigt sind die Öffnungen 10 derart ausgeführt, dass sich ihr Rand 10a am Rand der Innenfläche 7a des Deckels 7 befindet. Die etwa rechteckförmig ausgeführten Öffnungen 10 enden in einem Abstand zum freien umlaufenden Rand des Außenringes 8. Der zum Rand 10a parallele Rand 10b bildet jeweils eine Einraststelle für Schnapphaken 23b des Verschlussteils 6, wie weiter unten noch beschrieben wird. Die Öffnungen 10 sind ferner jeweils an einem gegenüber dem Außenring 8 etwas nach außen versetzen Rahmenteil 8a ausgebildet, welcher bis auf den Randbereich des Deckels 7 reicht. Der Rahmenteil 8a erhebt sich so weit über die Außenfläche des Deckels 7, dass Wasser seitlich ablaufen kann, ohne in die Öffnungen 10 zu fließen. An der Innenseite des Außenringes 8 sind einander diametral gegenüberliegend zwei Paare von Anschlägen 11 angeordnet, die ein kleines Stück radial ins Innere der Kappe 5 ragen. Die Innenfläche 7a des Deckels 7 ist ausgehend von dem in Fig. 2 angedeuteten Zentrum Z und in der in Fig. 2 gezeigten Lage nach außen, zum Außenring 8 zu geringfügig abschüssig ausgeführt. In der Schnittdarstellung der Fig. 6 liegt daher das Zentrum Z tiefer als der Rand der Fläche 7a. Die Innenfläche 7a ist daher insgesamt gesehen kegelmantelförmig, sodass in der in Fig. 2 gezeigten Lage - dies entspricht der Überkopflage des Füllstutzenverschlusses 1 ― Wasser auf der Fläche 7a von innen nach außen und über die Öffnungen 10 nach außen abfließen kann. Von der Innenfläche 7a des Deckel 7 ragen unter rechten Winkeln bzw. unter im Wesentlichen rechten Winkeln zur Innenfläche 7a vier gleichgroße rechteckige Rippen 12 ab. Die Rippen 12 sind auf einem zum Außenring 8 konzentrischen Kreis, jeweils um 90° gegeneinander versetzt und sich tangential zu diesem erstreckend, angeordnet. Die tangentiale Erstreckung der Rippen 12 ist größer als ihre Höhe h. Die Rippen 12 befinden sich in einem Abstand vom Zentrum Z der Fläche 7a, welcher zwischen 50% und 80% des Radius des Außenringes 8 entspricht. Auf einem zweiten, näher zu Z befindlichen konzentrischen Kreis sind tangential zu diesem vier übereinstimmend ausgeführte, niedrige, langgestreckte und gerade verlaufende Erhebungen 14 mit über ihre Länge verlaufenden Stecknuten 14a angeordnet. Die Erhebungen 14 befinden sich in einem Abstand vom Zentrum Z, welcher etwa 40% bis 60% des Radius des Außenringes entspricht, sind gegenüber den Rippen 12 um 45° versetzt und derart lang ausgeführt, dass sie mit den seitlichen Randabschnitten der Rippen 12 in radialer Richtung überlappen. In Fig. 2 ist dies durch zwei eingezeichnete in radialen Richtungen verlaufenden Linien r₁, r₂ angedeutet. Innerhalb der Erhebungen 14 befinden sich, um 45° zu diesen versetzt, auf einem dritten konzentrischen Kreis übereinstimmend ausgeführte Wandelemente aus seitlichen tangential verlaufenden Rippen 15a mit einem mittig integrierten Dom 15. Die Dome 15 sind Schraubdome und können mit oder ohne Gewinde ausgeführt sein, wobei bei einer Kunststoffausführung die Verwendung von selbstschneidenden Schrauben möglich ist. Diese Wandelemente überlappen in radialer Richtung mit den Randabschnitten der Erhebungen 14, analog zu deren Überlappung mit den Rippen 12. Die Dome 15 gestatten eine Schraubverbindung der Kappe 5 mit dem Verschlussteil 6, wie noch beschrieben wird. Die Dome 15 und die Rippen 15a weisen eine Höhe h' auf, die derart bemessen ist, dass die Dome 15 und die Rippen 15a bei angeschraubtem Verschlussteil 6 an der Innenfläche desselben anliegen. Die gegenseitige Anordnung der Rippen 12 zu den Erhebungen 14 und den Dome 15 und deren Rippen 15a ist derart, dass zwischen diesen Teilen jeweils Abstände von mindestens einigen Millimetern gegeben sind.

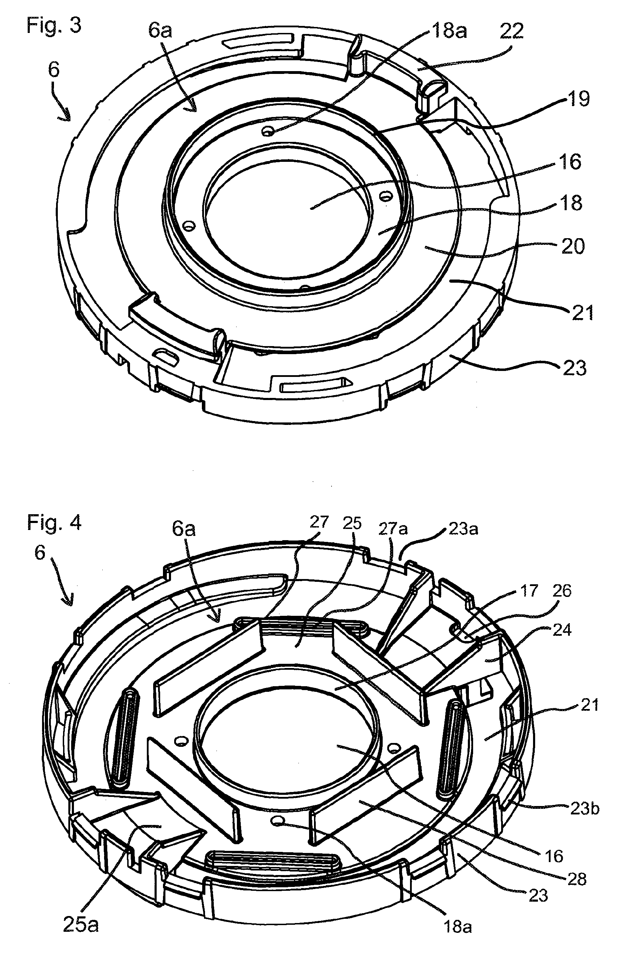

Fig. 3 zeigt die Außenseite des Verschlussteils 6, welche sich an der Unterseite des Füllstutzenverschlusses 1 befindet, wenn der Füllstutzenverschluss 1 horizontal mit obenliegender Kappe 5 eingebaut wird. Der Verschlussteil 6 ist mit einem Basisteil 6a versehen, welcher mittig mit einer kreisförmigen Öffnung 16 versehen ist, deren Durchmesser, je nach Größe des Füllstutzenverschlusses 1, in der Größenordnung von einigen Zentimetern, beispielsweise zwischen 5 cm und 7 cm, beträgt. An der Innenseite (Fig. 4) des Basisteils 6a ist die Öffnung 16 von einem Begrenzungsring 17 umschlossen, welcher im zusammengebauten Zustand von Kappe 5 und Verschlussteil 6 einen Spalt 29 zur Innenfläche 7a der Kappe 5 belässt. An der Außenseite (Fig. 3) schließt an die Öffnung 16 eine kreisringförmige, ebene Befestigungsfläche 18 an, welche von einem Versteifungsring 19 umlaufen ist. In der Befestigungsfläche 18 sind vier Löcher 18a ausgebildet, deren Position und gegenseitige Anordnung an die Position und Anordnung der Dome 15 in der Kappe 5 abgestimmt sind. An den Versteifungsring 19 schließt eine kreisringförmige Dichtfläche 20 an, welche, wie aus Fig. 10 ersichtlich ist, mit dem Dichtring 4 in Kontakt tritt, wenn der Füllstutzenverschluss 1 am Füllstutzen 2 befestigt ist. An die Dichtfläche 20 schließen am äußeren Umfangsbereich des Basisteils 6a zwei Öffnungen 21 an, welche im Wesentlichen nahezu über einen Halbkreis verlaufende Kreisringabschnitte sind, voneinander durch das diametral gegenüberliegende Knaggenpaar 22 getrennt sind und in bekannter Weise mit Verbreiterungen zur Aufnahme der Knaggen 3a des Knaggenringes 3 des Füllstutzens 2 versehen sind. Der Basisteil 6a ist von einem Außenring 23 umlaufen, welcher an der Innenseite des Verschlussteils 6 abragt. Der Außenring 23 ist durch paarweise angeordnete Ausnehmungen 23a unterbrochen, deren Anordnung und Positionierung auf die Positionen der Öffnungen 10 im Außenring 8 der Kappe 5 abgestimmt sind. An den Innenrändern der Ausnehmungen 23 a ist jeweils der bereits erwähnte und über den Außenring 23 nach außen vorspringende Schnapphaken 23b ausgebildet. Der Verschlussteil 6 bzw. sein Außenring 23 weist einen geringeren Außendurchmesser auf als die Kappe 5 bzw. deren Außenring 8, wobei diese Außendurchmesser derart aufeinander abgestimmt sind, dass die Kappe 5 mit ihrem Außenring 8 über den Außenring 23 des Verschlussteils 6 - in Kontakt zu diesem - positioniert werden kann, wobei die Schnapphaken 23b an den Einraststellen 10b der Öffnungen 10 der Kappe 5 einschnappen. Bei der Montage des Füllstutzenverschlusses 1 greifen die Knaggen 22 des Verschlussteils 6 in entsprechende Durchbrüche bzw. Öffnungen des Knaggenringes 3 am Füllstutzen 2 ein, sodass durch ein Verdrehen des Füllstutzenverschlusses 1 dieser am Füllstutzen 2 verankert wird.

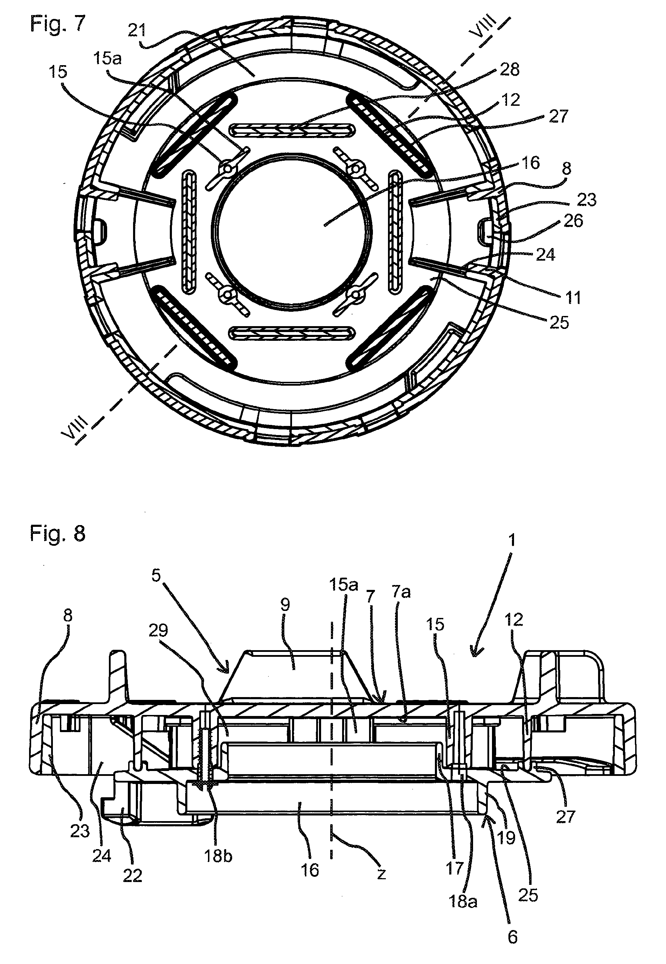

An der Innenseite des Basisteils 6a des Verschlussteils 6 sind, den Knaggen 22 gegenüber, rampenförmige Versteifungsrippen 24 in paarweiser Anordnung ausgebildet, an welche im zusammengebauten Zustand von Kappe 5 und Verschlussteil 6 innenseitig die Anschläge 11 anliegen, wie es aus Fig. 7 ersichtlich ist. Zwischen dem Begrenzungsring 17 und den Öffnungen 21 befindet sich am Basisteil 6a eine im Wesentlichen kreisringförmige Innenfläche 25, welche in der in Fig. 4 gezeigten Lage von innen nach außen in radialer Richtung geringfügig abschüssig ausgebildet ist, wie es insbesondere auch aus der Schnittdarstellung in Fig. 10 ersichtlich ist. In der horizontalen Einbausituation des Füllstutzenverschlusses 1 bewirkt diese schräge Ausführung der Innenfläche 25 das Ablaufen von Wasser und Abfließen desselben durch die Öffnungen 21. Die Neigung der Innenfläche 25a zwischen den Versteifungsrippen 24 ist gegenläufig, nach außen hin aufsteigend, wobei jeweils eine Öffnung 26 am äußeren Rand dieser Flächen 25a bei Schräglage oder vertikaler Einbaulage des Füllstutzenverschlusses 1 ein Abfließen von Wasser gestattet. Auf der Innenfläche 25 sind als Gegenstücke zu den Rippen 12 und den Erhebungen 14 bzw. deren Stecknuten 14a der Kappe 5 Erhebungen 27 mit Stecknuten 27a und Rippen 28 angeordnet. Die Abmessungen der Erhebungen 27 bzw. deren Stecknuten 27a sind an die Abmessungen der Rippen 12 und die Abmessungen der Rippen 28 an jene der Erhebungen 14 bzw. deren Stecknuten 14a angepasst, sodass beim Zusammenfügen des Verschlussteils 6 und der Kappe 5 die Rippen 28 in den Stecknuten 14a und die Rippen 12 in den Stecknuten 27a einrasten. Dadurch ergibt sich im Inneren des Füllstutzenverschlusses 1 eine Art Labyrinthsystem mit Wandelementen, insbesondere aus den Rippen 12, 28 und den Rippen 15a mit Domen 15, wie es aus Fig. 7 ersichtlich ist. Zusätzlich erfolgt eine Verschraubung des Verschlussteils 6 mit der Kappe 5 durch Einsetzen von Schrauben 18b in die Dome 15.

Erwähnt sei, dass es möglich ist, an einem der beiden Teile des Füllstutzenverschlusses 1, entweder an der Kappe 5 oder am Verschlussteil 6, sämtliche Rippen auszubilden und am zweiten Teil lediglich die entsprechenden Steckteile. Die Stecknuten müssen nicht in gesonderten Erhebungen ausgebildet sein, es ist auch möglich, diese an den Innenflächen der betreffenden Teile als Vertiefungen auszubilden. Wesentlich ist, dass die Wandelemente des Labyrinthsystems Barrieren bzw. Ableitflächen für eingedrungenes Wasser zur Verfügung stellen. Wesentlich ist auch, dass die Wandelemente einen ungehinderten Abfluss von Wasser zulassen, es ist daher eine ebene Ausführung der Wandelemente von Vorteil. Grundsätzlich ist es möglich, die Wandelemente konvex zu gestalten, sofern ein ungehindertes Abfließen von Wasser sichergestellt ist.

Erfindungsgemäß ausgeführte Füllstutzenverschlüsse 1 gestatten eine sehr gute Be- und Entlüftung durch die einen ungehinderten Luft- bzw. Gasstrom erlaubenden Öffnungen 10, 16, 21 und 26. Die Behälter bzw. Lagerräume sind, wie bereits erwähnt, mit zwei Füllstutzen und demnach auch mit zwei erfindungsgemäßen Füllstutzenverschlüssen 1 versehen, sodass der eine Füllstutzenverschluss 1 für die Belüftung und der zweite für die Entlüftung sorgen kann. Diese Maßnahme ist dann wirkungsvoll, wenn Temperaturunterschiede im Behälter bzw. Lagerraum Druckdifferenzen und somit Luft- bzw. Gasströmungen bewirken. Sollte sich herausstellen, dass der Druckunterschied für eine ausreichende Be- und Entlüftung zu gering ist, so kann ein erfindungsgemäßer Füllstutzenverschluss 1 zur Erhöhung der Belüftungsfunktion mit einem Ventilator 30 ausgerüstet sein, wie es in Fig. 9 und Fig. 10 gezeigt ist. Der Ventilator 30 wird in der mittigen Öffnung 16 des Verschlussteils 6 eingebaut, beispielsweise mit dem Ring 17 verschraubt, und auf nicht gezeigte Weise mit Energie versorgt.

Durch die besondere versetzte Anordnung der von den Rippen 12 und 28 sowie den Rippen 15a mit Domen 15 gebildeten Wandelemente ist zwischen dem Verschlussteil 6 und der Kappe 5 ein wirkungsvolles Ableitsystem für eingedrungenes Wasser gebildet. Wasser, welches durch die außen befindlichen Öffnungen 10 oder durch die Öffnungen 21 des Knaggensystems eindringt, wird in jeder Einbaulage des Füllstutzenverschlusses 1 wieder abtransportiert. Wird der Füllstutzenverschluss 1 horizontal und eben eingebaut, so bewirkt die Neigung der Innenfläche 25 des Basisteils 6a des Verschlussteiles 6 ein sicheres Ablaufen von Wasser. Wird der Füllstutzenverschluss 1 vertikal eingebaut, so fließt eingedrungenes Wasser entsprechend der Schwerkraft von oben nach unten. Die Anordnung der Rippen 12, 28 und Flügel 15a im Zwischenraum zwischen Verschlussteil 6 und Kappe 5 stellt sicher, dass das Wasser seitlich um die zentrale Öffnung 16 des Verschlussteiles 6 herumgeleitet wird und dann im unteren Teil des Verschlussteiles 6 nach außen austritt. Durch die ebene Ausführung der Rippen 12, 28 ist zudem eine Ansammlung von Wasser wirkungsvoll unterbunden.

Bei einer Überkopfmontage - die Außenfläche der Kappe 5 ist waagrecht und der Füllstutzenverschluss 1 ist von unten her montiert - läuft etwaig eingedrungenes Wasser über die geneigte Innenfläche 7a der Kappe 5 und durch die Öffnungen 10a ab. Auch in jeder beliebigen schrägen Einbaulage ist ein sicheres Ableiten von Wasser nach außen gewährleistet. Dies ist für die Be- und Entlüftungsfunktion erforderlich, da eine Ansammlung von Wasser mit Eisbildung im Winter das freie Durchströmen von Luft oder Gas beeinträchtigen kann.

Bei den dargestellten Ausführungsformen erfolgt die Verbindung der Kappe 5 mit dem Verschlussteil 6 außen durch die Schnapphaken 23b und innen durch Verschraubung. Es ist jedoch auch möglich, diese beiden Teile durch andere Technologien miteinander zu verbinden, beispielsweise durch Schweißen oder durch Kleben. Bei der gezeigten Ausführungsform sind die Oberflächen der Schnapphaken 23b abgeschrägt, sodass bei waagrechter Einbaulage Spritzwasser nach außen abläuft und gar nicht eindringt. Zusätzlich gewährleisten die Rahmenteile 8a, dass an der Außenfläche der Kappe 5 ablaufendes Wasser von den Öffnungen 10 ferngehalten wird. Im Inneren verhindert die Ausführung der Steckverbindungen der Rippen 12, 28 in den Stecknuten 14a, 27a der Erhebungen 14, 27 ein Unterspülen der Rippen 12, 28 mit Wasser.

Die Kappe 5 und der Verschlussteil 6 können aus konventionellen Werkstoffen, insbesondere Kunststoffen, Metall oder auch Holz, gefertigt sein. Von besonderem Vorteil ist eine Herstellung der Bauteile aus thermoplastischen Kunststoffen im Spritzgussverfahren, wobei auch faserverstärkte Kunststoffe verwendet werden können.

Das dargestellte Labyrinthsystem ist lediglich eine mögliche und besonders vorteilhafte Ausführungsform. Es ist möglich, mehr als vier Rippen bzw. Wandelemente entlang konzentrischer Kreise anzuordnen und es ist möglich, eine andere Art der Anordnung zu treffen, sofern die Wandelemente in einer gewissen Regelmäßigkeit und Gleichmäßigkeit angeordnet sind, um die Ableitung von eingedrungenem Wasser in allem möglichen, auch schrägen, Einbaulagen sicherzustellen.

Die mittige Öffnung 16 im Verschlussteil 6 muss nicht kreisrund ausgeführt sein, sodass der Begrenzungsring 17 ein der Form der Öffnung angepasstes Begrenzungselement sein kann.

### Bezugsziffernliste

- 1: Füllstutzenverschluss
- 2: Füllstutzen
- 3: Knaggenring (Kupplungsteil)
- 3a: Knagge (Kupplungselement)
- 4: Dichtring
- 5: Kappe
- 6: Verschlussteil
- 6a: Basisteil
- 7: Deckel
- 7a: Innenfläche
- 8: Außenring
- 8a: Rahmenteil
- 9: Anschlussteil
- 9a: Rippen
- 10: Öffnung
- 10a: Rand
- 10b: Einraststelle
- 11: Anschlag
- 12: Rippen
- 14: Erhebung
- 14a: Stecknut
- 15: Dom (Schraubdom)
- 15a: Rippe
- 16: Öffnung
- 17: Begrenzungsring
- 18: Befestigungsfläche
- 18a: Loch
- 18b: Schraube
- 19: Versteifungsring
- 20: Dichtfläche
- 21: Öffnung
- 22: Knagge
- 23: Außenring
- 23a: Ausnehmung
- 23b: Schnapphaken
- 24: Versteifungsrippe
- 25: Innenfläche
- 25a: Innenfläche
- 26: Öffnung
- 27: Erhebung
- 27a: Stecknut
- 28: Rippe
- 29: Spalt
- 30: Ventilator
- z: zentrale Achse
- Z: Zentrum
- r₁: Linie
- r₂: Linie
- h: Höhe der Rippe 12
- h': Höhe des Doms 15

## Patentansprüche

1. Füllstutzenverschluss für eine Kupplungshälfte einer Rohr- bzw. Schlauchkupplung mit einem Füllstutzen (2), insbesondere für eine Kupplungshälfte einer Kupplung System STORZ, wobei der Verschluss mit Kupplungselementen zum Befestigen an einem Kupplungsteil (3) des Füllstutzens (2) versehen ist,
**dadurch gekennzeichnet,**
**dass** der Verschluss eine äußere Kappe (5) und einen mit dieser fest verbundenen Verschlussteil (6) aufweist, wobei die Kappe (5) und der Verschlussteil (6) einen Zwischenraum umschließen und der Verschlussteil (6) mit den Kupplungselementen und mit einer zum Füllstutzen (2) offenen Öffnung (16) versehen ist, welche im Zwischenraum unter Freilassung eines Spaltes (29) zur Innenfläche (7a) der Kappe (5) von einem Begrenzungselement (17) umschlossen ist, wobei die Kappe (5) und der Verschlussteil (6) Öffnungen (10, 21, 26) zur Be-und Entlüftung und zum Ablauf von eingedrungenem Wasser aufweisen, und wobei im Zwischenraum von Kappe (5) und Verschlussteil (6) ein Labyrinthsystem aus die Kappe (5) und den Verschlussteil (6) miteinander verbindenden Wandelementen (12, 28, 15, 15a) gebildet ist, welche ein ungehindertes Abfließen von Wasser an ihren Außenflächen gestatten und um die zentrale Achse (z) des Füllstutzenverschlusses (1), sich quer zur jeweils radialen Richtung erstreckend, in regelmäßiger Anordnung vorgesehen sind.

2. Füllstutzenverschluss nach Anspruch 1, **dadurch gekennzeichnet, dass** die Wandelemente (12, 28, 15, 15a) in unterschiedlichen Abständen zur zentralen Achse (z) und derart angeordnet sind, dass sie mit ihren seitlichen Randabschnitten und in radialen Richtungen betrachtet einander überlappen.

3. Füllstutzenverschluss nach Anspruch 1 oder 2, **dadurch gekennzeichnet, dass** die Wandelemente an der Kappe (5) und/oder dem Verschlussteil (6) fest angeordnet sind und in Stecknuten (14a, 27a), welche jeweils am anderen Teil - Kappe (5) und/oder Verschlussteil (6) - angeordnet sind, eingerastet sind.

4. Füllstutzenverschluss nach einem der Ansprüche 1 bis 3, **dadurch gekennzeichnet, dass** die Wandelemente (12, 28, 15, 15a) entlang von konzentrischen Kreisen unterschiedlicher Radien, deren Mittelpunkt auf der zentralen Achse (z) liegt, angeordnet sind.

5. Füllstutzenverschluss nach einem der Ansprüche 1 bis 3, **dadurch gekennzeichnet, dass** die Wandelemente mit ebenen Außenflächen versehene Rippen (18, 28, 15a) sind bzw. aufweisen.

6. Füllstutzenverschluss nach Anspruch 1, **dadurch gekennzeichnet, dass** die Kappe (5) und der Verschlussteil (6) jeweils einen Außenring (8, 23) aufweisen, wobei der Außenring (8) der Kappe (5) den Außenring (23) des Verschlussteils (6) außen umfasst.

7. Füllstutzenverschluss nach Anspruch 6, **dadurch gekennzeichnet, dass** die Außenringe (8, 23) miteinander korrespondierende Öffnungen (10) und Ausnehmungen (23a) aufweisen.

8. Füllstutzenverschluss nach Anspruch 7, **dadurch gekennzeichnet, dass** im Bereich der Ausnehmungen (23a) des Außenringes (23) des Verschlussteils (6) Schnapphaken (23b) ausgebildet sind, welche jeweils an einem Rand einer Öffnung (10) des Außenringes (8) der Kappe (5) eingerastet sind.

9. Füllstutzenverschluss nach einem der Ansprüche 1 bis 8, **dadurch gekennzeichnet, dass** die Innenflächen (7a, 25) der Kappe (5) und des Verschlussteils (6) von innen nach außen abschüssig verlaufende Flächen sind bzw. aufweisen.

10. Füllstutzenverschluss nach einem der Ansprüche 1 bis 9, **dadurch gekennzeichnet, dass** im Bereich der mittigen Öffnung (16) des Verschlussteils (6) ein Ventilator (30) eingebaut ist.

11. Rohr- bzw. Schlauchkupplung, insbesondere eine Kupplung System STORZ, mit einer Kupplungshälfte mit einem Füllstutzenverschluss gemäß einem oder mehreren der Ansprüche 1 bis 10.

## Claims

1. A filler neck closure for a coupling half of a tube or hose coupling, comprising a filler neck (2), in particular for a coupling half of a coupling of the system STORZ, wherein the closure is provided with coupling elements for fastening to a coupling part (3) of the filler neck (2), **characterized in**
**that** the closure has an outer cap (5) and a closure part (6) fixedly connected to said cap, wherein the cap (5) and the closure part (6) enclose an intermediate space, and the closure part (6) is provided with the coupling elements and with an opening (16) that is open towards the filler neck (2), which opening is enclosed in the intermediate space by a delimiting element (17) while leaving a gap (29) towards the inner surface (7a) of the cap (5), wherein the cap (5) and the closure part (6) have openings (10, 21, 26) for ventilation and deaeration and for draining penetrated water, and wherein in the intermediate space of the cap (5) and the closure part (6), a labyrinth system is formed from wall elements (12, 28, 15, 15a) which connect the cap (5) and the closure part (6) to each other and which permit unhindered draining of water on their outer surfaces, and which are provided in a regular arrangement around the central axis (z) of the filler neck closure (1) and extend transverse to the respective radial direction.

2. The filler neck closure according to claim 1, **characterized in that** the wall elements (12, 28, 15, 15a) are arranged at different spacings from the central axis and in such a manner that they overlap each other with their lateral edge portions and viewed in radial directions.

3. The filler neck closure according to claim 1 or claim 2, **characterized in that** the wall elements are fixedly arranged on the cap (5) and/or the closure part (6), and are latched in plug-in grooves (14a, 27a) which are arranged on the respective other part - the cap (5) and/or the closure part (6).

4. The filler neck closure according to any one of the claims 1 to 3, **characterized in that** the wall elements (12, 28, 15, 15a) are arranged along concentric circles that have different radii and the centre of which lies on the central axis (z).

5. The filler neck closure according to any one of the claims 1 to 3, **characterized in that** the wall elements are ribs or have ribs (18, 28, 15a) with planar outer surfaces.

6. The filler neck closure according to claim 1, **characterized in that** the cap (5) and the closer part (6) each have an outer ring (8, 23), wherein the outer ring (8) of the cap (5) surrounds the outer ring (23) of the closure part (6) on the outside.

7. The filler neck closure according to claim 6, **characterized in that** the outer rings (8, 23) have openings (10) and recesses (23a) that correspond with each other.

8. The filler neck closure according to claim 7, **characterized in that** snap-in hooks (23b) are formed in the region of the recesses (23a) of the outer ring (23) of the closure part (6), each of which snap-in hooks is latched at an edge of an opening (10) of the outer ring (8) of the cap (5).

9. The filler neck closure according to any one of the claims 1 to 8, **characterized in that** the inner surfaces (7a, 25) of the cap (5) and the closure part (6) are surfaces or have surfaces that extend declining from the inside towards the outside.

10. The filler neck closure according to any one of the claims 1 to 9, **characterized in that** a ventilator (30) is installed in the region of the central opening (16) of the closure part (6).

11. A tube or hose coupling, in particular a coupling of the system STORZ, comprising a coupling half with a filler neck closure according to one or more of the claims 1 to 10.

## Revendications

1. Fermeture d'un embout de remplissage pour une moitié de raccord d'un raccord de tuyau ou de tuyau flexible doté d'un embout de remplissage (2), en particulier pour une moitié de raccord d'un raccord de système STORZ, la fermeture étant munie d'éléments de raccord pour fixer à une partie de raccordement (3) de l'embout de remplissage (2), **caractérisé en ce que**
la fermeture comporte un capuchon (5) extérieur et une partie de fermeture (6) reliée fermement à celui-ci, le capuchon (5) et la partie de fermeture (6) entourant un espace intermédiaire et la partie de fermeture (6) étant munie des éléments de raccord et d'une ouverture (16) ouverte vers l'embout de remplissage (2), laquelle est entourée dans l'espace intermédiaire d'un élément de délimitation (17) en libérant un interstice (29) vers la surface intérieure (7a) du capuchon (5), le capuchon (5) et la partie de fermeture (6) comportant des ouvertures (10, 21, 26) pour l'aération et la purge et pour l'écoulement de l'eau ayant pénétré et un système de labyrinthe étant formé dans l'espace intermédiaire du capuchon (5) et de la partie de fermeture (6) à partir des éléments de paroi (12, 28, 15, 15a) reliant entre eux le capuchon (5) et la partie de fermeture (6), lesquels permettent un écoulement libre de l'eau sur leurs surfaces extérieures et sont prévues en disposition régulière autour de l'axe central (z) de la fermeture d'un embout de remplissage (1) s'étendant à chaque fois transversalement au sens radial.

2. Fermeture d'un embout de remplissage selon la revendication 1, **caractérisée en ce que** les éléments de paroi (12, 28, 15, 15a) sont disposés à intervalles différents par rapport à l'axe central (z) et de telle sorte qu'ils se chevauchent entre eux avec leurs sections de bordure latérales et considérées dans les directions radiales.

3. Fermeture d'un embout de remplissage selon la revendication 1 ou 2, **caractérisée en ce que** les éléments de paroi sont disposés fixement sur le capuchon (5) et/ou la partie de fermeture (6) et sont enclenchés dans des rainures de connexion (14a, 27a) qui sont respectivement disposées sur l'autre partie, capuchon (5) et/ou partie de fermeture (6).

4. Fermeture d'un embout de remplissage selon une quelconque des revendications 1 à 3, **caractérisée en ce que** les éléments de paroi (12, 28, 15, 15a) sont disposés le long de cercles concentriques de rayons différents dont le centre est situé sur l' axe central (z).

5. Fermeture d'un embout de remplissage selon une quelconque des revendications 1 à 3, **caractérisée en ce que** les éléments de paroi sont ou comportent des nervures (18, 28, 15a) munies de surfaces extérieures planes.

6. Fermeture d'un embout de remplissage selon la revendication 1, **caractérisée en ce que** le capuchon (5) et la partie de fermeture (6) comportent respectivement une couronne extérieure (8, 23), la couronne extérieure (8) du capuchon (5) entourant extérieurement la couronne extérieure (23) de la partie de fermeture (6).

7. Fermeture d'un embout de remplissage selon la revendication 6, **caractérisée en ce que** les couronnes extérieures (8, 23) comportent des ouvertures (10) et des évidements (23a) correspondant entre eux.

8. Fermeture d'un embout de remplissage selon la revendication 7, **caractérisée en ce que** dans la zone des évidements (23a) de la couronne extérieure (23) de la partie de fermeture (6) sont constitués des crochets-mousquetons (23b) qui sont enclenchés à chaque fois sur un bord d'une ouverture (10) de la couronne extérieure (8) du capuchon (5).

9. Fermeture d'un embout de remplissage selon une quelconque des revendications 1 à 8, **caractérisée en ce que** les surfaces intérieures (7a, 25) du capuchon (5) et de la partie de fermeture (6) sont et comportent des surfaces passant en inclinaison de l'intérieur vers l'extérieur.

10. Fermeture d'un embout de remplissage selon une quelconque des revendications 1 à 9, **caractérisée en ce que** dans la zone de l'ouverture centrale (16) de la partie de fermeture (6) est incorporé un ventilateur (30).

11. Raccord de tuyau ou de tuyau flexible, en particulier un raccord de système STORZ avec une moitié de raccord doté d'une fermeture d'un embout de remplissage selon une quelconque ou plusieurs des revendications 1 à 10.
